# EUROPEAN PATENT SPECIFICATION

(11) **EP 2 344 423 B1**
(45) Date of publication and mention of the grant of the patent: **11.06.2014**
(21) Application number: 09789299.6
(22) Date of filing: 11.09.2009
(51) Int. Cl.: C02F 1/469, C02F 1/461, C02F 5/00

(54) **CAPACITIVE DEIONIZATION CELL WITH BALANCED ELECTRODES**
KAPAZITIVE ENTIONISIERUNGSZELLE MIT AUSGEGLICHENEN ELEKTRODEN
CELLULE DE DÉSIONISATION CAPACITIVE À ÉLECTRODES ÉQUILIBRÉES

(30) Priority: 15.09.2008 US 96899 P
(43) Date of publication of application: 20.07.2011
(73) Proprietor: Voltea B.V., 2171 AE Sassenheim (NL)
(72) Inventor: SULLIVAN, James, P., Lincoln University PA 19352 (US); ZUCKERBROD, David, Baltimore MD 21209 (US); MURTHY, Mahesh, Newark DE 19702 (US); JOHNSON, William, B., Newark DE 19711 (US); HARDWICK, Steve, Newark DE 19711 (US)
(74) Representative: Fluit, Jeroen
(86) International application number: PCT/US2009/005115
(87) International publication number: WO 2010/030385

(56) References cited:
- US-A1- 2004 038 090
- US-A1- 2004 095 706
- US-A1- 2007 284 313

## Description

### BACKGROUND OF THE INVENTION

Capacitive deionization (CDI) cells are known for purifying or otherwise deionizing liquids such as water. For example, U.S. Patent No.5,954,937 discloses an electrically regeneratable electrochemical cell for capacitive deionization and electrochemical purification and regeneration of electrodes including two end plates, one at each end of the cell. Two end electrodes are arranged one at each end of the cell, adjacent to the end plates. An insulator layer is interposed between each end plate and the adjacent end electrode. Each end electrode includes a single sheet of conductive material having a high specific surface area and sorption capacity. In one embodiment of this disclosure, the sheet of conductive material is formed of carbon aerogel composite. The cell further includes a plurality of generally identical double-sided intermediate electrodes that are equidistally separated from each other, between the two end electrodes. As the electrolyte enters the cell, it flows through a continuous open serpentine channel defined by the electrodes, substantially parallel to the surfaces of the electrodes. By polarizing the cell, ions are removed from the electrolyte and are held in the electric double layers formed at the carbon aerogel surfaces of the electrodes. As the cell is saturated with the removed ions, the cell is regenerated electrically, thus minimizing secondary wastes.

U.S. Patent No. 6,709,560 discloses flow-through capacitors that are provided with one or more charge barrier layers. Ions trapped in the pore volume of flow-through capacitors cause inefficiencies as these ions are expelled during the charge cycle into the purification path. A charge barrier layer holds these pore volume ions to one side of a desired flow stream, thereby increasing the efficiency with which the flow-through capacitor purifies or concentrates ions.

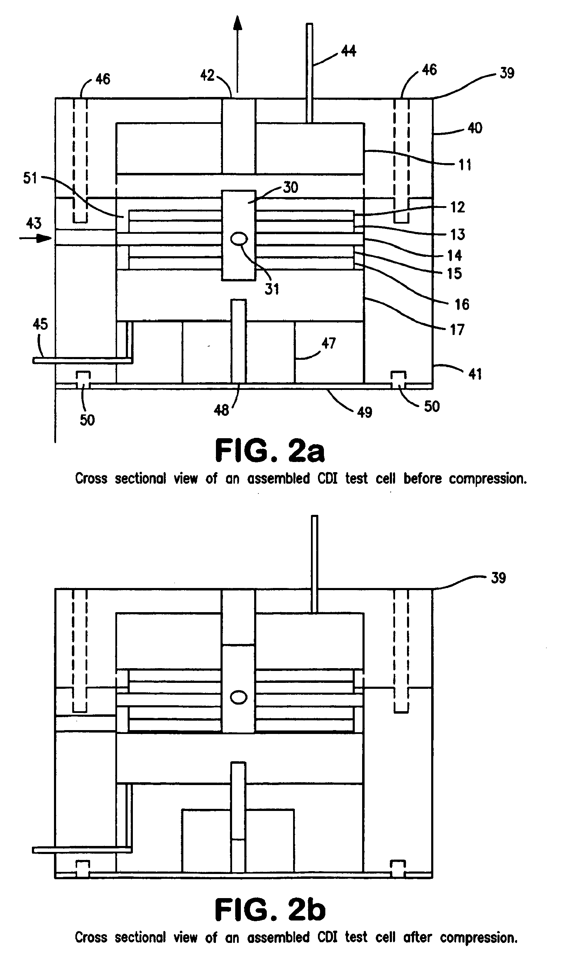

U.S. Patent No. 6,798,639 discloses flow through capacitors in which, in general, asymmetric flowthrough capacitors are formed, increasing overall capacitance. The asymmetry is accomplished by utilizing electrodes of different materials, different dimensions, or the same materials with different capacitance properties. Referring to FIG. 2 of the '639 patent, a schematic of an asymmetrical flow-through capacitor is depicted. The flow-through capacitor 200 includes a positive electrode 210 having a capacitance value C+' and a negative electrode 220 having a capacitance value C- (i.e., the same capacities as electrode 120). If the value of C+ is sufficiently increased, the expression 1/C+ in equation 1 (of the patent) approaches zero, and thus the overall capacitance C.sub.T' can be expressed in Equation 2 (of the patent). The capacitance value C.sub.T may be sufficiently increased by using an asymetrical configuration, wherein one electrode has a much higher capacitance than the other. Thus, as can be seen from Equation 2 (of the patent), the overall capacitance C.sub.T' is approximately double that of the symmetrical cell with the same capacitance values for the negative electrode. Specifically, the reference states that the relative values of the negative and positive electrodes may be such that the capacitance of one is at least double that of the other. The term "substantially greater" as used in that patent is defined, therefore, as being at least double the value. That is, the reference teaches that to maximize capacitance, one electrode should have a capacitance at least twice that of the other, and that either electrode can be the larger one.

These references all produce useful CDI cells, but a CDI cell that performs better is still needed. The desirable CDI cell has a large capacitance to remove ions from a liquid stream, and is durable enough to be able to run over a longer period of time.

As used herein, "effective capacitance" means dQ/dV for a membrane-electrode conjugate as determined by current interrupt as described herein.

Also as used herein, "durability" means hours until ion removal is less than 60% (under test conditions specified herein).

### SUMMARY OF THE INVENTION

The present invention provides a capacitive deionization cell comprising a first electrode, an anion selective membrane adjacent said first electrode forming an anion membrane-electrode conjugate, a cation selective membrane in spacial relation with said anion selective membrane defining a fluid flow path between said anion selective membrane and said cation selective membrane,and a second electrode adjacent said cation selective membrane forming a cation membrane-electrode conjugate, wherein said anion membrane-electrode conjugate and said cation membrane-electrode conjugate each have an effective capacitance, and the ratio of the effective capacitance of said cation membrane-electrode conjugate to the effective capacitance of said anion membrane-electrode conjugate is a non-zero number less than 2, wherein said first electrode and said second electrode each have a thickness, and a ratio of the thickness of said first electrode to the thickness of said second electrode is greater than 2. Preferably the ratio of said effective capacitance may be about 1. Preferably the ratio of said thickness is greater than 3, 4, and 5, respectively. The first electrode and second electrode may comprise different materials. A porous spacer is preferably disposed in said fluid flow path.

In an alternative embodiment, the comprising a plurality of said anion membrane-electrode conjugates and said cation membraneelectrode conjugates, and wherein said ratio is the ratio of the effective capacitance of all of said cation membrane-electrode conjugates to the effective capacitance of all of said anion membrane-electrode conjugates. Preferably, the capacitive deionization cell as defined in claim 1 wherein the cell has has a durability of greater than 200 hours.

### DESCRIPTION OF THE DRAWINGS

Figure 1 is an exploded view of an exemplary embodiment of the invention.
Figure 2a is a cross sectional view of an assembled CDI cell according to an exemplary embodiment of the invention before compression.
Figure 2b is a cross sectional view of an assembled CDI cell according to an exemplary embodiment of the invention after compression.
Figure 3 is a schematic of the test apparatus used for CDI testing.
Figure 4 is a graph of an Example test cycle illustrating TDS variation during the cycle.
Figure 5 is a cross section of an exemplary CDI test cell showing the location of the reference electrode, (70).
Figure 6 (reserved)
Figure 7 is an illustration of Ion Capacity - defined as the integrated area between the incoming TDS and the measured TDS at the outlet of the cell.
Figure 8 is a graph of Capacitance from current interrupt data.

### DETAILED DESCRIPTION OF THE INVENTION

Applicants have discovered that using an anion electrode that is thicker than a cation electrode, but substantially similar in effective capacitance (such that the effective capacitance of neither electrode is more than two times the capacitance of the other), provides a CDI cell with greater performance characteristics. Surprisingly, and contrary to conventional wisdom as expressed in the '639 patent mentioned above, the phenomenon is not observed in reverse; that is, if the anion electrode is much thicker than the cation electrode. This concept is illustrated with reference to the attached figures.

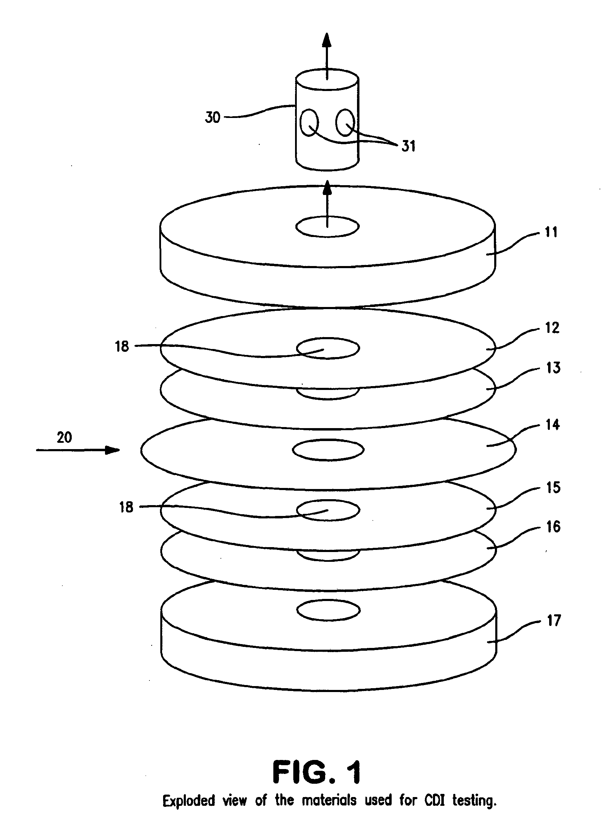

An exploded view of the inside of a CDI cell according to an exemplary embodiment of the present invention is illustrated schematically in Figure 1. The cell consists of a stack of discs, consisting in order, of an anion electrode, 12, an anion selective membrane, 13, a woven spacer, 14, that serves as a fluid flow path, a cation selective membrane, 15, and a cation electrode, 16. The stack of materials is compressed between two conductive graphite carbon blocks (POCO Graphite, Inc.), 11 and 17, which serve as electrical contacts to the electrodes. During the charging, or purification cycle, the anion electrode contacting graphite carbon block, 11, is electrically connected to the positive terminal of the power supply. The cation electrode contacting graphite carbon block, 17 is connected to the negative terminal of the power supply. A plurality of such cells may be used, in series or in parallel, in alternative embodiments of the invention.

The anion and cation electrodes, (12) and (16) are cut from sheets, composed of activated carbon, conductive carbon black and a PTFE binder. Electrodes of this type are widely used in electric double layer capacitors. In these tests, electrodes of varying thickness were obtained from Japan Gore-Tex, Inc., Okayama, Japan. The dimensions of the electrodes in the cell of this embodiment are 3" in diameter, and have a 0.5" diameter hole (18) in the center to allow the treated water to pass out of the cell.

The anion membrane (13) is cut from sheets of NEOSEPTA AM1 (Amerida/ASTOM). The dimensions are 3" OD with a 0.5" ID. The cation membrane (15) is cut from sheets of NEOSEPTA CM1 (Amerida/ASTOM). The spacer, 14, is a 3.25" OD x 0.5" ID disc cut from a 0.004" woven polyester screen.

The flow of water into the cell is radial, with water entering the cell from the outside edge of the spacer, (14), and flowing out the center exit tube, (30). Holes (31) are positioned in the center exit tube to enable water to flow from the spacer into the tube.

A cross section of exemplary cell components as assembled in an exemplary cylindrical cell housing, (39), are shown in Figure 2a. The housing consists of a top half (40) and a bottom half (41), joined by means of 4 bolts (46). The cation contacting graphite carbon block, (17) is mounted to a pneumatically actuated air cylinder (47). The cell components, 12-16 are stacked on top of the carbon block (17), and around the exit tube (30). The anion contacting carbon block (11), is rigidly mounted to the top half to the housing (40). Electrical leads 44 and 45 connect the anion contacting carbon block (11) and the cation contacting carbon block (17) to the power supply. Water is brought into the cell through the water inlet (43) and fills the circular cavity (51) surrounding the cell components (12-16). The water flows radially through the spacer (14) and exits the cell via holes (31) in the exit tube (30) and the cell water outlet (42). The pneumatic cylinder is mounted to a base (49), which is attached to the bottom half of the housing (41) by means of bolts (50). The air cylinder piston (48) is mounted to the cation contacting carbon block 17. When the air cylinder is activated the air cylinder piston is extended from the air cylinder, raising (17) and compressing the cell assembly as shown in Figure 2b.

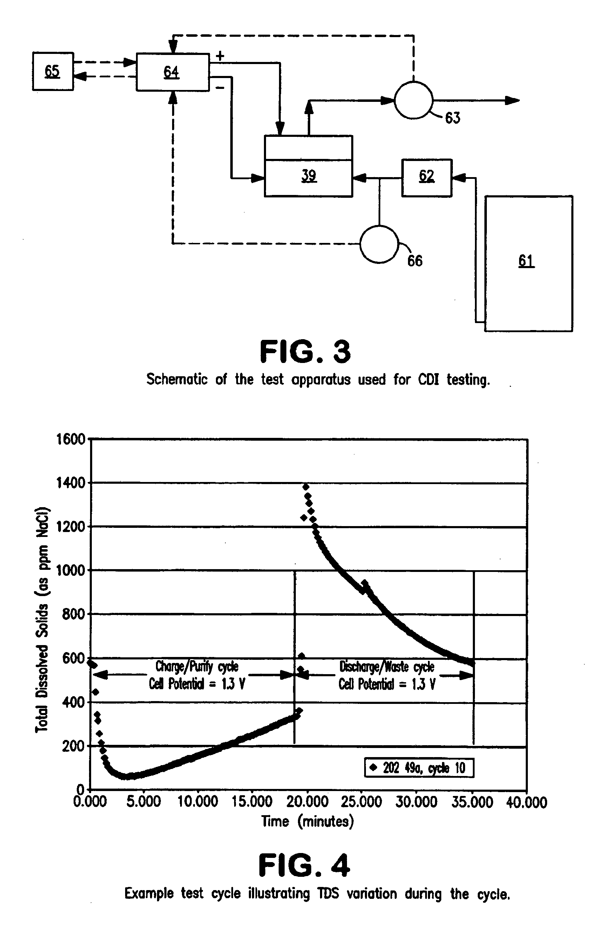

In operation of this exemplary embodiment, as shown in Figure 3, water is pumped from a reservoir, (61), via a peristaltic pump (62) into the cell (39). Treated water is analyzed with a conductivity probe (63). The output of the conductivity probe is converted to total dissolved solids (TDS), based on a NaCl calibration. Power is applied to the cell by means of an programmable battery cycle tester (64)(ARBIN BT2000). Potential, current and conductivity are recorded as a function of time on a computer (65). The inlet pressure to the cell is monitored by an inlet pressure transducer (66), whose output can optionally be included in the ARBIN (64).

The cell TDS can be utilized as a set point by the battery cycle tester in the controlling charge and discharge cycles. Inlet water TDS is nominally 480 ppm. At the beginning of the charge cycle, the TDS rapidly declines to some minimum value (see Figure 4). After reaching the minimum value, TDS increases slowly. Typically charge cycles are conducted until the product TDS reaches 320 ppm, at which point the polarity of the potential is reversed, causing the cell to discharge. There is a rapid increase in current and TDS on discharge. After reaching a peak, the TDS decreases and the discharge is typically allowed to proceed until the product TDS falls to 580 ppm.

### EXAMPLES

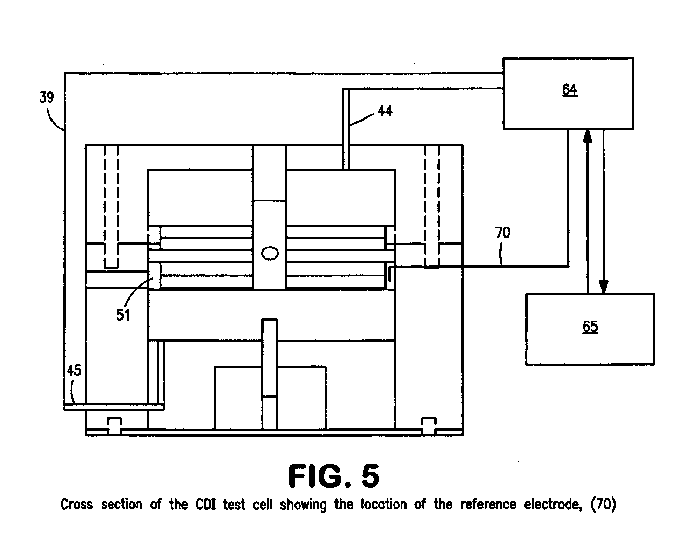

In some experiments it was considered useful to employ a Ag/AgCl reference electrode (see Figure 5) (70) to determine how the potential split between the two electrodes. The position of the reference electrode is shown in Figure 5. Positioned in the circular cavity (51) surrounding the cell components, the solution potential should be constant. The chloride activity of the test water was estimated to be 0.00356 M using Debye-Huckle approximations for the activity coefficient. From this activity, the potential of the reference electrode was determined to be 0.367V vs. the standard hydrogen electrode. Protocols could be programmed that enabled a short open circuit condition, or a so called current interrupt. This protocol enabled in-situ determination of the potential of each electrode, free of cell IR.

### Electrodes

Activated Carbon Electrodes in thicknesses of 250 micron, 600 micron, 800 micron and 1000 micron, were obtained from Japan Gore-Tex. These electrodes are marketed commercially for electrolytic double layer capacitor, and particularly for coin cell applications.

### Membranes

Cation Membrane was either NEOSEPTA CM1, obtained from ASTOM or GORE SELECT (GS018950-44us) produced by W.L. GORE & Associates, Inc.. Anion membrane was either NEOSEPTA AM1, also obtained from ASTOM or FUMASEP FAB 30um non-brominated (lot MI0507-140), obtained from FUMATECH GmbH..

### Spacer

The spacer was a woven polyester screen, 0.004" thick, 180 threads per inch, PETENYL, obtained from Tenyl Tecidos Técnicos Ltda, Brazil.

### Test water

A test water made to simulate a "hard" tap water was formulated using the following recipe.

| | |
|---|---|
| Calcium chloride dehydrate (CaCl2·2H2O) | 293.6 mg/L |
| Sodium bicarbonate (NaHCO3) | 310.7 mg/L |
| Magnesium sulfate heptahydrate (MgSO4·7H2O) | 246.5 mg/L |

The resulting water had a total hardness of 300 mgCaCO3/L, calcium hardness of 200 mg/L, alkalinity 185 mg CaCO3/L and a pH of approximately 8.0.

### Experimental procedure

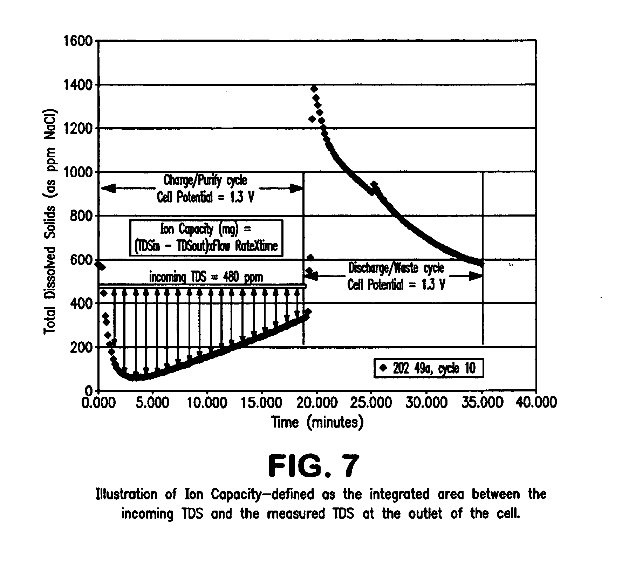

1. Electrodes and membranes are cut to 3"OD by 0.5" ID. Spacer is cut slightly oversized 3.25" OD by 0.5" ID.
2. All materials are soaked in a solution of 1000 ppm NaCl for a minimum of 1 hour.
3. The materials are assembled in the cell as shown in Figures 1-2.
4. The cell is closed and the materials compressed by means of the pneumatic cylinder.
5. A flow of 7 ml/min of test water is initiated by means of a peristaltic pump.
6. Potential was applied by an ARBIN battery cycler. The test protocol consisted of the application of 1.3 V across the cell (Also called charging or purify). TDS was recorded as a function of time as illustrated in Figure 4.
7. Upon applying a potential, ions are removed and TDS drops. This continues until the cell becomes saturated. At this point the TDS exiting the cell begins to increase.
8. When the TDS level reaches 320 ppm, the polarity of the voltage is reversed (-1.3 volts) to fully discharge the cell (also called discharge or waste). This discharge step is continued until the outlet TDS reaches a value of 580 ppm. At that point the cycle is repeated.
9. Average TDS is calculated by averaging the TDS measurements over the course of an entire charge (purify) cycle. A test is stopped when the Average TDS reaches 60% of the incoming TDS or an average TDS of approximately 290 ppm.
10. One can also define a cell capacity as the integrated TDS over the duration of a charge cycle as illustrated in Figure 7. The difference between TDS in and TDS out is measured at each point, multiplied by the flow rate and the time interval. This is integrated over all the peaks, to produce an integrated ion capacity.

In the example and comparative examples, the cation membrane was GORE SELECT and the Anion membrane was FUMATECH FAB.

**Table 1**

| Run | Cation Electrode Thickness (microns) | Anion Electrode Thickness (microns) | Hours until average TDS is 290 ppm | Hours until capacity is <50% of initial |
|---|---|---|---|---|
| Comparative Example 1 | 250 | 250 | 21 | 15 |
| Comparative Example 2 | 600 | 600 | 58 | 70 |
| Comparative Example 3 | 800 | 800 | 67 | 92 |
| Example 1 | 250 | 800 | >245 | >245 |
| Comparative Example 4 | 800 | 250 | 22 | 13 |

### Current interrupt Experiments

Current interrupt experiments were conducted to determine the in-situ capacitance of the electrodes in operation. It is well known that double layer capacitance is a function of both voltage and concentration, so measurement of the actual capacitance during operation must be determined by current interrupt techniques.

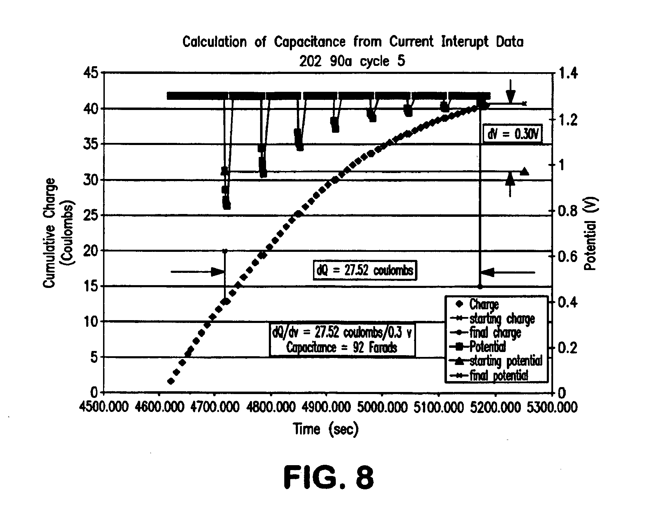

The experiment is conducted much like described above, except the cell is configured with a Ag/AgCl reference electrode, as shown in Figure 5, above. At periodic intervals an open circuit condition is created, which generates an interruption in current. The cell potential observed immediately after current interrupt is defined as the IR free potential of the cell. Total cell potential and the potential of the anion electrode (relative to the reference electrode) are obtained experimentally. The potential of the cation electrode is taken by difference. The battery cycler also records the integrated charge over the course of each cycle. Capacitance, dQ/dV, can then be calculated as shown in Figure 8. Since three potential differences are available, total potential, anion potential and cation potential, three capacitances can also be obtained: Ccell, Canion and Ccation.

Some of the experiments from the Table 1 were repeated using the current interrupt protocol. In these experiments, NEOSEPTA membranes were utilized. In most cases only a few cycles were conducted and capacitance was averaged over the last few cycles after capacitance had stabilized.

### Comparative Example 1 -- 250 micron cation electrode -250 micron anion electrode

Although nominally identical electrodes, the current interrupt data suggests that there is a very large difference in capacitance between the cation and anion electrodes. The anion electrode has approximately 1/10 the capacitance of the cation electrode. See Table 2

### Comparative Example 3 -- 800 micron cation electrode-800 micron anion electrode

Once again, nominally identical electrodes had quite different capacitance when measured by means of current interrupt protocols. The average capacitance of the anion electrode was once again 1/10 of the cation electrode. Total cell capacitance increased due to the extra capacity available from the thicker electrode. (See Table 2)

### Example 1 -- 250 micron cation electrode-800 micron anion electrode

By utilizing a 250 micron cation electrode in conjunction with a 800 micron anode electrode, the capacitance was balance so the difference in in-situ capacitance of the cation and anion electrodes was only about a factor of ½. As shown in Table 1, above, achieving this balance unexpectedly resulted in a significant improvement in cell durability.

**Table 2. Summary of Current Interrupt Data**

| Run | Cation electrode | Anion electrode | cycle | Total Capacitance (F) | Anion effective capacitance (F) | Cation effective Capacitance (F) | Check |
|---|---|---|---|---|---|---|---|
| Comparative Example 1 | JGI 250 | JGI 250 | 1 | 108 | 143 | 444 | 108 |
| | | | 2 | 99 | 127 | 446 | 99 |
| weight(g) | 0.577 | 0.577 | 3 | 102 | 124 | 567 | 102 |
| area(cm2) | 44.3 | 44.3 | 4 | 96 | 105 | 1126 | 96 |
| | | | 5 | 92 | 108 | 659 | 92 |
| | | | 6 | 90 | 98 | 1074 | 90 |
| | | | 7 | 90 | 100 | 971 | 90 |
| | | | 8 | 87 | 93 | 1277 | 87 |
| | | | 9 | 89 | 95 | 1327 | 89 |
| | | | 10 | 87 | 93 | 1188 | 87 |
| | | | Avg last 5 cycles | 89 | 96 | 1167 | |
| Comparative Example 3 | JGI 800 | JGI 800 | 1 | 250 | 320 | 1142 | 250 |
| | | | 2 | 249 | 361 | 769 | 249 |
| weight(g) | 1.738 | 1.738 | 3 | 249 | 347 | 888 | 249 |
| area(cm2) | 44.3 | 44.3 | 4 | 253 | 347 | 928 | 253 |
| | | | 5 | 239 | 293 | 1289 | 239 |
| | | | 6 | 235 | 274 | 1621 | 235 |
| | | | 7 | 225 | 251 | 2210 | 225 |
| | | | 8 | 225 | 252 | 2122 | 225 |
| | | | 9 | 214 | 240 | 1997 | 214 |
| | | | 10 | 216 | 226 | 4547 | 216 |
| | | | Avg last 5 cycles | 223 | 249 | 2499 | |
| Example 1 | JGI 250 | JGI 800 | 1 | 145 | 208 | 482 | 145 |
| | | | 2 | 156 | 221 | 532 | 156 |
| weight(g) | 0.577 | 1.738 | 3 | 150 | 211 | 512 | 150 |
| area(cm2) | 44.3 | 44.3 | 4 | 142 | 225 | 387 | 142 |
| | | | 5 | 137 | 222 | 360 | 137 |
| | | | 6 | 138 | 220 | 372 | 138 |
| | | | 7 | 141 | 208 | 437 | 141 |
| | | | 8 | - | - | - | |
| | | | 9 | - | - | - | |
| | | | 10 | - | - | - | |
| | | | Avg last 5 cycles | 142 | 217 | 413 | |

### Comparative Example 4 -- 800-250 experiment

In this experiment, an 800 micron cation and a 250 micron anion electrode were employed. In this case capacitance could not be calculated because the potential of the cation electrode became more positive, rather than more negative, over the course of a charging cycle. This indicates that some process other than electrostatic charging is taking place. It is interesting that this behavior coincides with the worst overall performance observed in Table 1.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A capacitive deionization cell comprising a first electrode 12, an anion selective membrane 13 adjacent said first electrode 12 forming an anion membrane-electrode conjugate, a cation selective membrane 15 in spacial relation with said anion selective membrane defining a fluid flow path between said anion selective membrane and said cation selective membrane, and a second electrode 16 adjacent said cation selective membrane forming a cation membrane-electrode conjugate, wherein said anion membrane-electrode conjugate and said cation membrane-electrode conjugate each have an effective capacitance, and the ratio of the effective capacitance of said cation membrane-electrode conjugate to the effective capacitance of said anion membrane-electrode conjugate is a non-zero number less than 2, wherein said first electrode and said second electrode each have a thickness, and a ratio of the thickness of said first electrode to the thickness of said second electrode is greater than 2.

2. A capacitive deionization cell as defined in claim 1 wherein said ratio of said effective capacitance of said cation membrane electrode conjugate to the effective capacitance of said anion membrane-electrode conjugate is about 1.

3. A capacitive deionization cell as defined in claim 1 wherein said first electrode 12 and said second electrode 16 each have a thickness, and a ratio of the thickness of said first electrode to the thickness of said second electrode is greater than 3.

4. A capacitive deionization cell as defined in claim 1 wherein said first electrode 12 and said second electrode 16 each have a thickness, and a ratio of the thickness of said first electrode to the thickness of said second electrode is greater than 4.

5. A capacitive deionization cell as defined in claim 1 wherein said first electrode 12 and said second electrode 16 each have a thickness, and a ratio of the thickness of said first electrode to the thickness of said second electrode is greater than 5.

6. A capacitive deionization cell as defined in claim 1 wherein said first electrode and said second electrode comprise different materials.

7. A capacitive deionization cell as defined in claim 1 further comprising a porous spacer disposed in said fluid flow path.

8. A capacitive deionization cell as defined in claim 1 further comprising a plurality of said anion membrane-electrode conjugates and said cation membrane-electrode conjugates, and wherein said ratio is the ratio of the effective capacitance of all of said cation membrane electrode conjugates to the effective capacitance of all of said anion membrane-electrode conjugates.

9. A capacitive deionization cell as defined in claim 1 wherein the cell has a durability of greater than 200 hours.

## Patentansprüche

1. Kapazitive Deionisierungszelle, umfassend eine erste Elektrode 12, eine anionenselektive Membran 13 benachbart zu der ersten Elektrode 12, die ein Anionenmembranelektrodenkonjugat ausbilden, eine kationenselektive Membran 15 in räumlicher Beziehung mit der anionenselektiven Membran, die einen Fluidströmungspfad zwischen der anionenselektiven Membran und der kationenselektiven Membran definiert, und eine zweite Elektrode 16, die benachbart zu der kationenselektiven Membran ist und ein Kationenmembranelektrodenkonjugat ausbildet, wobei das Anionenmembranelektrodenkonjugat und das Kationenmembranelektrodenkonjugat jeweils eine effektive Kapazität haben, und wobei das Verhältnis zwischen der effektiven Kapazität des Kationenmembranelektrodenkonjugats zu der effektiven Kapazität des Anionenmembranelektrodenkonjugats eine Zahl ungleich 0 und kleiner 2 ist, wobei die erste Elektrode und die zweite Elektrode jeweils eine Dicke besitzen, und ein Verhältnis der Dicke der ersten Elektrode zu der Dicke der zweiten Elektrode größer als 2 ist.

2. Kapazitive Deionisierungszelle nach Anspruch 1, wobei das Verhältnis der effektiven Kapazität des Kationenmembranelektrodenkonjugats zu der effektiven Kapazität des Anionenmembranelektrodenkonjugats ungefähr 1 ist.

3. Kapazitive Deionisierungszelle nach Anspruch 1, wobei die erste Elektrode 12 und die zweite Elektrode 16 jeweils eine Dicke besitzen, und ein Verhältnis der Dicke der ersten Elektrode zu der Dicke der zweiten Elektrode größer als 3 ist.

4. Kapazitive Deionisierungszelle nach Anspruch 1, wobei die erste Elektrode 12 und die zweite Elektrode 16 jeweils eine Dicke besitzen, und ein Verhältnis der Dicke der ersten Elektrode zu der Dicke der zweiten Elektrode größer als 4 ist.

5. Kapazitive Deionisierungszelle nach Anspruch 1, wobei die erste Elektrode 12 und die zweite Elektrode 16 jeweils eine Dicke besitzen, und ein Verhältnis der Dicke der ersten Elektrode zu der Dicke der zweiten Elektrode größer als 5 ist.

6. Kapazitive Deionisierungszelle nach Anspruch 1, wobei die erste Elektrode und die zweite Elektrode verschiedene Materialien umfassen.

7. Kapazitive Deionisierungszelle nach Anspruch 1, die weiterhin ein poröses Abstandsstück umfasst, das in dem Fluidströmungspfad angeordnet ist.

8. Kapazitive Deionisierungszelle nach Anspruch 1, die weiterhin eine Vielzahl von Anionenmembranelektrodenkonjugaten und Kationenmembranelektrodenkonjugaten umfasst, und wobei das Verhältnis das Verhältnis der effektiven Kapazität aller Kationenmembranelektrodenkonjugate zu der effektiven Kapazität aller Anionenmembranelektrodenkonjugate ist.

9. Kapazitive Deionisierungszelle nach Anspruch 1, wobei die Zelle eine Haltbarkeit von mehr als 200 Stunden hat.

## Revendications

1. Cellule de désionisation capacitive comprenant une première électrode (12), une membrane sélective aux anions (13) adjacente à ladite première électrode (12) formant un conjugué membrane anionique-électrode, une membrane sélective aux cations (15) dans une relation spatiale avec ladite membrane sélective aux anions définissant un trajet d'écoulement de fluide entre ladite membrane sélective aux anions et ladite membrane sélective aux cations, et une deuxième électrode (16) adjacente à ladite membrane sélective aux cations formant un conjugué membrane cationique-électrode, dans laquelle ledit conjugué membrane anionique-électrode et ledit conjugué membrane cationique-électrode ont chacun une capacitance efficace, et le rapport entre la capacitance efficace dudit conjugué membrane cationique-électrode et la capacitance efficace dudit conjugué membrane anionique-électrode est un nombre différent de zéro inférieur à 2, dans laquelle ladite première électrode et ladite deuxième électrode ont chacune une épaisseur, et un rapport entre l'épaisseur de ladite première électrode et l'épaisseur de ladite deuxième électrode est supérieur à 2.

2. Cellule de désionisation capacitive selon la revendication 1, dans laquelle ledit rapport entre ladite capacitance efficace dudit conjugué membrane cationique-électrode et la capacitance efficace dudit conjugué membrane anionique-électrode est à peu près égal à 1.

3. Cellule de désionisation capacitive selon la revendication 1, dans laquelle ladite première électrode (12) et ladite deuxième électrode (16) ont chacune une épaisseur, et un rapport entre l'épaisseur de ladite première électrode et l'épaisseur de ladite deuxième électrode est supérieur à 3.

4. Cellule de désionisation capacitive selon la revendication 1, dans laquelle ladite première électrode (12) et ladite deuxième électrode (16) ont chacune une épaisseur, et un rapport entre l'épaisseur de ladite première électrode et l'épaisseur de ladite deuxième électrode est supérieur à 4.

5. Cellule de désionisation capacitive selon la revendication 1, dans laquelle ladite première électrode (12) et ladite deuxième électrode (16) ont chacune une épaisseur, et un rapport entre l'épaisseur de ladite première électrode et l'épaisseur de ladite deuxième électrode est supérieur à 5.

6. Cellule de désionisation capacitive selon la revendication 1, dans laquelle ladite première électrode et ladite deuxième électrode comprennent différents matériaux.

7. Cellule de désionisation capacitive selon la revendication 1, comprenant en outre un élément d'espacement poreux disposé dans ledit trajet d'écoulement de fluide.

8. Cellule de désionisation capacitive selon la revendication 1, comprenant en outre une pluralité de dits conjugués membrane anionique-électrode et de dits conjugués membrane cationique-électrode, et dans laquelle ledit rapport est le rapport entre la capacitance efficace de la totalité desdits conjugués membrane cationique-électrode et la capacitance efficace de la totalité desdits conjugués membrane anionique-électrode.

9. Cellule de désionisation capacitive selon la revendication 1, dans laquelle la cellule a une durée de vie supérieure à 200 heures.
